# EUROPÄISCHE PATENTANMELDUNG

(11) **EP 1 950 477 A2**
(43) Veröffentlichungstag der Anmeldung: **30.07.2008**
(21) Anmeldenummer: 08100397.2
(22) Anmeldetag: 14.01.2008
(51) Int. Cl.: F16L 3/10

(54) **Rohrschelle**

(30) Priorität: 23.01.2007 DE 102007000032
(71) Anmelder: HILTI Aktiengesellschaft, 9494 Schaan (LI)
(72) Erfinder: Unverzagt, Stefan, 6800 Feldkirch (AT); Birnbaum, Ulrich, 86899 Epfenhausen (DE); Bömcke, Christian, 6832 Röthis (AT); Dietze, Sven, 6830 Rankweil (AT); Schierscher, Gabriel, 9494 Schaan (LI)
(74) Vertreter: Wildi, Roland

(57) **Zusammenfassung**

Eine Rohrschelle weist zumindest einen eine Krümmung aufweisenden Schellenbügel (14) und einen krümmungsseitig nach aussen vorspringenden Anschlusskopf (21) für ein Befestigungselement (7) auf, der ein Gewindeteil (24) mit einem ersten Gewinde (28) sowie eine Auflagerfläche (25) aufweist, an der ein Durchzug (22) mit einem zweiten Gewinde (23) ausgebildet ist, dessen Gewindedurchmesser (D1) verschieden zu dem Gewindedurchmesser (E1) des ersten Gewindes (28) des Gewindeteils (24) ist.

## Beschreibung

Die Erfindung betrifft eine Rohrschelle mit zumindest einem eine Krümmung aufweisenden Schellenbügel und mit einem krümmungsseitig nach aussen vorspringenden Anschlusskopf für ein Befestigungselement, der ein Gewindeteil mit einem ersten Gewinde sowie eine Auflagerfläche aufweist.

Eine derartige Rohrschelle dient der Fixierung und Halterung von Leitungen, wie z. B. von Rohren, Kabeln oder dergleichen, an einem Untergrund oder an einem Träger mittels eines Befestigungselementes, wie beispielsweise einer Gewindestange.

Aus der DE 29 11 897 A1 ist beispielsweise eine Rohrschelle mit einem Anschlusskopf bekannt, der als Gewindeteil mit einem ersten Gewinde eine an einer Auflagerfläche festgelegte Sechskantmutter mit einem Innengewinde aufweist. Über das Innengewinde der Sechskantmutter kann die Rohrschelle mit einem Ende eines mit einem Aussengewinde versehenen Befestigungselementes fixiert werden, wobei die Aussenkontur der Mutter Schlüsselflächen für ein Werkzeug zur Übertragung eines Drehmomentes aufweist.

Nachteilig an der bekannten Lösung ist, dass an dem Anschlusskopf nur ein Gewindedurchmesser für die Festlegung eines Befestigungselementes zur Verfügung steht. Somit muss auch bei geringen Belastungen beziehungsweise Anforderungen ein auf höhere Anforderungen abgestimmtes Befestigungselement zur Festlegung der Rohrschelle verwendet werden.

Aus der DE195 09 997 A1 ist eine Rohrschelle mit einem Anschlusskopf bekannt, der als ein Gewindeteil eine Hutmutter mit zwei Gewindebereichen zeigt. An dieser Hutmutter sind zwei Befestigungselemente mit unterschiedlichen Durchmessern festlegbar.

Nachteilig an der bekannten Lösung ist, dass derartige Hutmuttern im Vergleich zu einer herkömmlichen Mutter aufwändiger herzustellen sind und somit die Fertigung der Rohrschelle massgeblich verteuert wird, was insbesondere bei einem Massenprodukt, wie es eine solche Rohrschelle darstellt, einen wesentlichen Nachteil darstellt. Des Weiteren muss für jede Kombination von zwei unterschiedlichen Gewinden eine speziell auf diese Kombination abgestimmte Hutmutter gefertigt werden.

Aufgabe der Erfindung ist es, eine Rohrschelle mit einem Anschlusskopf zu schaffen, der einen Anschluss von zwei Befestigungselementen mit unterschiedlichem Durchmesser ermöglicht und dabei einfach zu fertigen ist.

Die Aufgabe ist durch die Merkmale des unabhängigen Anspruchs gelöst. Vorteilhafte Weiterbildungen sind in den Unteransprüchen dargelegt.

Gemäss der Erfindung ist an der Auflagerfläche ein Durchzug mit einem zweiten Gewinde ausgebildet, dessen Gewindedurchmesser verschieden zu dem Gewindedurchmesser des ersten Gewindes des Gewindeteils ist.

Die Rohrschelle weist somit einen einfach herstellbaren und flexibel zu fertigenden Doppelgewindeanschluss auf. Je nach Anforderungen an die Befestigung oder Verfügbarkeit des Befestigungsmittels wird das Befestigungsmittel mit dem entsprechenden Gewindedurchmesser gewählt und mit dem grösseren beziehungsweise mit dem kleineren Gewinde des Anschlusskopfes verbunden. Für das Gewindeteil werden herkömmliche Normteile verwendet, die entsprechend der gewünschten Anforderungen ausgewählt werden. Die Ausbildung des Durchzugs kann einfach in die Fertigung des Schellenbügels integriert werden. Zudem steift die Kombination eines Gewindeteils mit einem Durchzug den geschaffenen Anschlusskopf aus, was eine hohe Sicherheit der Befestigung gewährleistet. Verschiedene Arten und Ausgestaltungen von Gewinden sind miteinander kombinierbar. Beispielsweise kann das erste Gewinde des Gewindeteils als ein Zollgewinde und das zweite Gewinde des Durchzugs als ein metrisches Gewinde ausgebildet sein. Auch zwei Gewinde, die eine unterschiedliche Steigung aufweisen, können an dem erfindungsgemässen Anschlusskopf vorgesehen werden. Das zweite Gewinde des Durchzugs ist vorteilhaft koaxial zu dem ersten Gewinde des Gewindeteils angeordnet. Des Weiteren kann das zweite Gewinde des Durchzugs zwei im Durchmesser unterschiedliche Gewindeabschnitte aufweisen, so dass einem solchen Anschlusskopf drei Befestigungselemente mit unterschiedlichen Durchmessern anordnenbar sind.

Das Gewindeteil ist z. B. eine an der Auflagerfläche festgelegte Sechskantmutter, die aussenseitig eine Drehmitnahme für ein Werkzeug aufweist. Zwei Seitenflächen des vorspringenden Anschlusskopfes sind vorteilhaft ebenfalls als Schlüsselflächen ausgebildet, die besonders vorteilhaft mit zwei Seitenflächen der Mutter übereinstimmen und so eine gemeinsame Angriffsfläche für ein Drehmomentwerkzeug ausbilden. Alternativ ist das Gewindeteil eine mit einem Innengewinde versehene Gewindehülse. Das Gewindeteil ist beispielsweise mittels Schweisspunkte an der Auflagerfläche des vorspringenden Anschlusskopfes festgelegt.

Die erfindungsgemässe Rohrschelle ist nicht nur einfach herstellbar, sondern ermöglicht zudem mit einem Typ von Anschlusskopf verschiedene, z. B. länderspezifische Befestigungselemente mit unterschiedlichen Durchmessern anzuordnen. Dies reduziert den logistischen Aufwand für den Hersteller wie auch den Anwender solcher Rohrschellen massgeblich, da z. B. der Anwender für seine Anwendungen weniger verschiedene Ausführungen von Rohrschellen vorrätig haben muss.

Vorzugsweise ist der Gewindedurchmesser des zweiten Gewindes des Durchzugs kleiner als der Gewindedurchmesser des ersten Gewindes des Gewindeteils. Dadurch kann das Gewindeteil krümmungsseitig aussen an der Auflagerfläche vorgesehen werden, was eine einfache Fertigung des Anschlusskopfes der Rohrschelle ermöglicht.

Bevorzugt ragt der Durchzug ausgehend von der Auflagerfläche krümmungsseitig nach innen ab, so dass kein Abschnitt des Durchzugs über die ebene Auflagerfläche nach aussen vorsteht und eine Montage der Rohrschelle nahe beim Untergrund oder am Träger behindert. Die maximale Erstreckung des Durchzugs ausgehend von der Auflagerfläche ist vorteilhaft derart gewählt, dass das freie Ende des Durchzugs nicht in den von dem zumindest einen Schellenbügel aufgespannten Aufnahmeraum für die zu fixierende Leitung hineinragt und eine Montage der Leitung behindert.

Vorzugsweise ist am freien Ende des Durchzugs ein Eindrehbegrenzungsmittel vorgesehen, das die maximale Eindrehtiefe des Befestigungselementes beschränkt und dadurch ein Eindringen des Befestigungselementes in die Projektion des Aufnahmeraums für die zu fixierende Leitung verhindert. Das Eindrehbegrenzungsmittel ist beispielsweise ein an dem Durchzug ausgeformter Abschnitt, der die von dem Durchzug geschaffene Öffnung verengt.

In einer weiteren erfindungsgemässen Variante ragt der Durchzug ausgehend von der Auflagerfläche krümmungsseitig nach aussen ab und ist somit von dem Aufnahmeraum für die Leitung abgewandt. Der Durchzug ragt bei dieser Ausführungsform vorteilhaft in einen in dem Gewindeteil vorgesehenen Aufnahmeraum hinein. Die maximale Erstreckung des Durchzugs ausgehend von der Auflagerfläche und somit die maximale Länge des zweiten Gewindes im Durchzug ist nicht durch den erforderlichen Aufnahmeraum für die Leitungen beschränkt.

Vorzugsweise ist am Endbereich des Durchzugs im Bereich der Auflagerfläche ein Eindrehbegrenzungsmittel vorgesehen, das die maximale Eindrehtiefe des Befestigungselementes beschränkt und somit ein Eindringen des Befestigungselementes in die Projektion des Aufnahmeraums der Rohrschelle verhindert. Das Eindrehbegrenzungsmittel ist beispielsweise ein die von dem Durchzug gebildete Öffnung verengender Materialvorsprung, z. B. in Form von einzelnen vorspringenden Nasen.

Die Erfindung wird nachstehend anhand von zwei Ausführungsbeispielen näher erläutert. Es zeigen:
Fig. 1 Eine erfindungsgemässe Rohrschelle in Seitenansicht;
Fig. 2 einen Anschlusskopf im Grundriss aus der Ebene II-II in Fig. 1 gesehen;
Fig. 3 einen Schnitt durch den Anschlusskopf entlang der Linie III-III in Fig. 2;
Fig. 4 einen Grundriss analog Fig. 3 eines zweiten Ausführungsbeispiels eines Anschlusskopfes;
Fig. 5 einen Schnitt durch den Anschlusskopf entlang der Linie V-V in Fig. 4.

Grundsätzlich sind in den Figuren gleiche Teile mit den gleichen Bezugszeichen versehen.

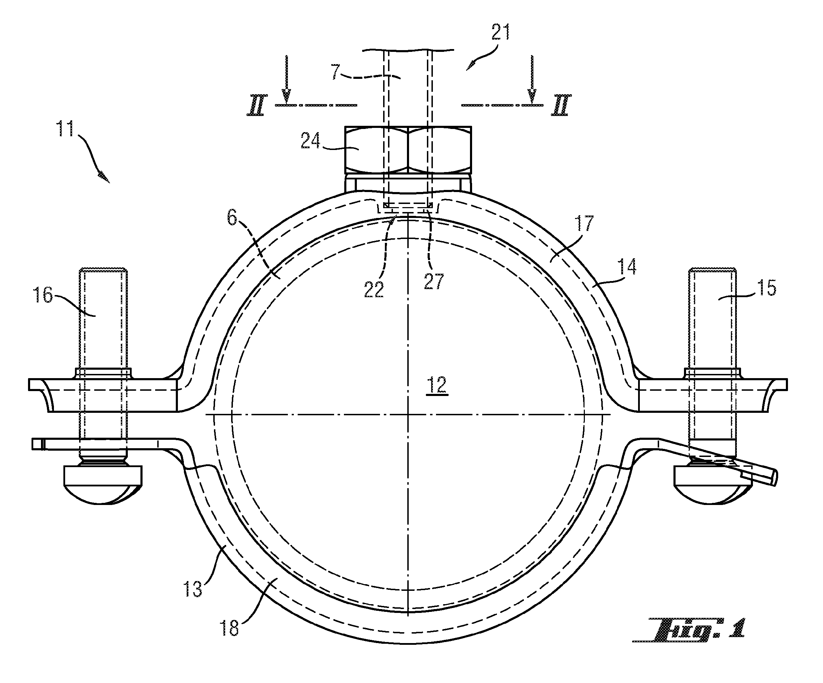

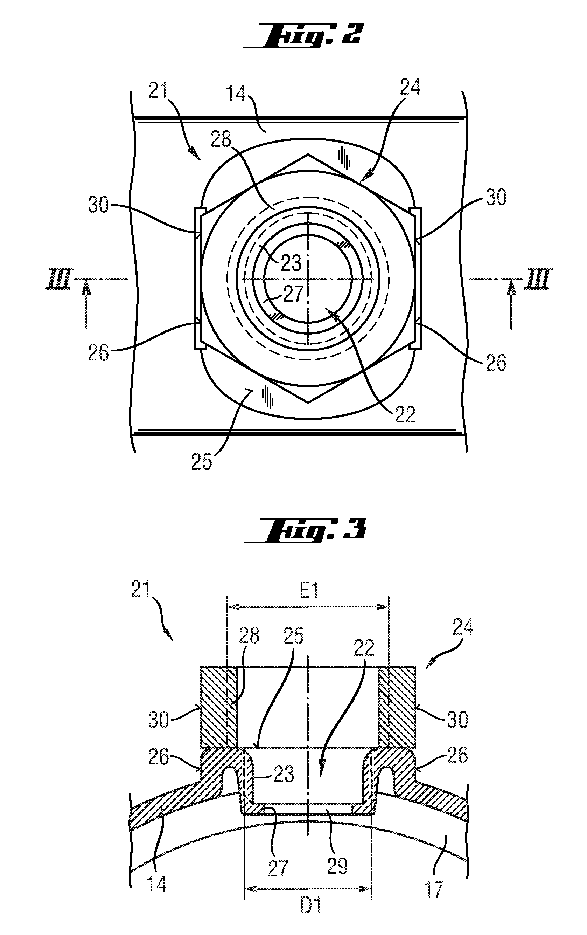

Die in den Figuren 1 bis 3 dargestellte Rohrschelle 11 zur Fixierung einer Leitung 6 weist zwei jeweils eine Krümmung aufweisende Schellenbügel 13 und 14 auf, die über Verbindungsmittel 15 und 16 lösbar miteinander verbunden sind und die einen Aufnahmeraum 12 für die Leitung 6 aufspannen. An dem Schellenbügel 14 ist ein krümmungsseitig nach aussen vorspringender, tiefgezogener Anschlusskopf 21 zur Festlegung der Rohrschelle 11 mittels eines Befestigungselementes 7 an einem Untergrund angeordnet. Die Schellenbügel 13 und 14 weisen entlang ihrer Längserstreckung jeweils beidseitig seitlich angeordnete, dem Aufnahmeraum 12 zugewandte Flansche 17 und 18 auf.

Der Anschlusskopf 21 weist eine im Wesentlichen ebene Auflagerfläche 25 sowie als ein Gewindeteil 24 mit einem ersten Gewinde 28 eine Sechskantmutter und einen von der Auflagerfläche 25 abragenden Durchzug 22 mit einem zweiten Gewinde 23 auf. Der Gewindedurchmesser D1 des zweiten Gewindes 23 ist kleiner als der Gewindedurchmesser E1 des ersten Gewindes 28 des Gewindeteils 24 ausgebildet. Weiter weist der vorspringende Anschlusskopf 21 zwei einander gegenüberliegende, parallel zueinander ausgerichtete Seitenflächen 26 auf, die mit zwei entsprechenden Seitenflächen 30 des Gewindeteils 24 zur Ausbildung von Schlüsselflächen für ein Werkzeug in einer Ebene liegen.

Der Durchzug 22 ragt ausgehend von der Auflagerfläche 25 krümmungsseitig nach innen beziehungsweise in diesem Ausführungsbeispiel radial nach innen ab und ist somit dem von den Schellenbügeln 13 und 14 aufgespannten Aufnahmeraum 12 zugewandt. Das freie Ende 29 des Durchzugs 22 ragt nicht in die von den Flanschen 17 und 18 der Schellenbügel 13 und 14 begrenzten Projektion des Aufnahmeraums 12 hinein. Am freien Ende 29 des Durchzugs 22 ist ein die von dem Durchzug 22 geschaffene Öffnung verengender Abschnitt 27 als Eindrehbegrenzungsmittel vorgesehen.

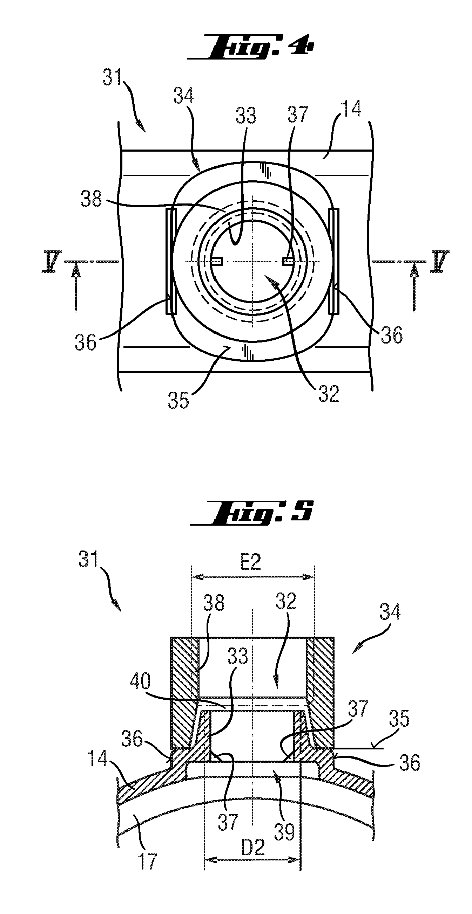

Bei dem in den Figuren 4 und 5 dargestellten Anschlusskopf 31 ist zur Schaffung eines Doppelgewindes zusätzlich zu dem als Innengewindehülse ausgebildeten Gewindeteil 34 mit dem ersten Gewinde 38 ein Durchzug 32 mit einem zweiten Gewinde 33 an der Auflagerfläche 35 ausgebildet, der ausgehend von der Auflagerfläche 35 krümmungsseitig nach aussen abragt beziehungsweise dem von dem Schellenbügel 14 aufgespannten Aufnahmeraum 12 abgewandt ist. Das zweite Gewinde 33 weist einen Gewindedurchmesser D2 auf, der kleiner als der Gewindedurchmesser E2 des ersten Gewindes 38 des Gewindeteils 34 ist. In dem Gewindeteil 34 ist ein Aufnahmeraum 40 für den Durchzug 32 vorgesehen.

Dieser Anschlusskopf 31 weist zudem zwei einander gegenüberliegende Seitenflächen 36 zur Ausbildung von Schlüsselflächen auf, die im Wesentlichen parallel zueinander ausgerichtet sind. Am Endbereich 39 des Durchzugs 32 sind im Bereich der Auflagerfläche 35 mehrere Nasen 37 als Eindrehbegrenzungsmittel vorgesehen, welche die von dem Durchzug 32 geschaffene Öffnung in diesem Endbereich 39 des Durchzugs 32 verengen.

## Patentansprüche

1. Rohrschelle mit zumindest einem eine Krümmung aufweisenden Schellenbügel (13, 14) und mit einem krümmungsseitig nach aussen vorspringenden Anschlusskopf (21; 31) für ein Befestigungselement (7), der ein Gewindeteil (24; 34) mit einem ersten Gewinde (28; 38) sowie eine Auflagerfläche (25; 35) aufweist, **dadurch gekennzeichnet, dass**
an der Auflagerfläche (25; 35) ein Durchzug (22; 32) mit einem zweiten Gewinde (23; 33) ausgebildet ist, dessen Gewindedurchmesser (D1; D2) verschieden zu dem Gewindedurchmesser (E1; E2) des ersten Gewindes (28; 38) des Gewindeteils (24; 34) ist.

2. Rohrschelle nach Anspruch 1, **dadurch gekennzeichnet, dass** der Gewindedurchmesser (D1; D2) des zweiten Gewindes (23; 33) des Durchzugs (22; 32) kleiner als der Gewindedurchmesser (E1; E2) des ersten Gewindes (28; 38) des Gewindeteils (24; 34) ist.

3. Rohrschelle nach Anspruch 1 oder 2, **dadurch gekennzeichnet, dass** der Durchzug (22) ausgehend von der Auflagerfläche (25) krümmungsseitig nach innen abragt.

4. Rohrschelle nach Anspruch 3, **dadurch gekennzeichnet, dass** am freien Ende (29) des Durchzugs (22) ein Eindrehbegrenzungsmittel vorgesehen ist.

5. Rohrschelle nach Anspruch 1oder 2, **dadurch gekennzeichnet, dass** der Durchzug (32) ausgehend von der Auflagerfläche (35) krümmungsseitig nach aussen abragt.

6. Rohrschelle nach Anspruch 5, **dadurch gekennzeichnet, dass** am Endbereich (39) des Durchzugs (32) im Bereich der Auflagerfläche (35) ein Eindrehbegrenzungsmittel vorgesehen ist.
